# FASCICULE DE BREVET EUROPEEN

(11) **EP 0 979 539 B1**
(45) Date de publication et mention de la délivrance du brevet: **04.10.2001**
(21) Numéro de dépôt: 98920598.4
(22) Date de dépôt: 09.04.1998
(51) Int. Cl.: H01Q 3/14, H01Q 19/06

(54) **DISPOSITIF TERMINAL-ANTENNE POUR CONSTELLATION DE SATELLITES DEFILANTS**
ANORDNUNG AUS ENDGERÄT UND ANTENNE FÜR SATELLITENSYSTEM MIT NIEDRIGER UMLAUFBAHN
TERMINAL-ANTENNA DEVICE FOR MOVING SATELLITE CONSTELLATION

(30) Priorité: 30.04.1997 FR 9705407; 01.08.1997 FR 9709900
(43) Date de publication de la demande: 16.02.2000
(73) Titulaire: ALCATEL, 75008 Paris (FR)
(72) Inventeur: CAILLE, Gérard, F-31170 Tournefeuille (FR); PINTE, Béatrice, F-31670 Labège (FR)
(74) Mandataire: Smith, Bradford Lee
(86) Numéro de dépôt international: FR9800720
(87) Numéro de publication internationale: WO9849746

(56) Documents cités:
- EP-A- 0 579 407
- EP-A- 0 707 356
- WO-A-88/09066

## Description

L'invention concerne un dispositif terminal-antenne d'émission / réception de données vers des satellites défilant en orbite basse terrestre.

Le dispositif terminal-antenne est destiné à être inséré au sein d'un ensemble de transmission de données à haut débit de et vers une constellation de satellites, à usage public ou privé, civil ou militaire.

Une telle constellation comprend un grand nombre de satellites défilants placés en orbite basse ou moyenne autour de la Terre. Dans une configuration classique, l'altitude est de 800 à 1500 km, et les satellites sont régulièrement espacés angulairement sur une série de plans orbitaux, avec par exemple huit satellites échelonnés sur chaque orbite à 45° d'écart les uns des autres, et huit plans orbitaux très inclinés entourant la Terre, de manière à ce que tout point du globe soit en permanence en vue d'au moins deux sinon trois de ces satellites. Le choix d'une orbite basse pour les satellites est motivé par un besoin de forte interactivité, non compatible avec les temps de propagation via l'orbite géostationnaire vers une station centralisatrice d'accès aux réseaux, et de débit de données élevé, et donc de puissance reçue par les récepteurs importante. Ce choix entraîne par contre le défilement rapide des satellites, un satellite placé sur une orbite à 1500 km ne restant en vue d'un point au sol que 10 minutes environ.

Dans le but de réduire le nombre de satellites assurant la continuité des communications avec les terminaux sol, il est nécessaire audits terminaux de pouvoir suivre les satellites le plus longtemps possible, donc autant que possible jusqu'à l'horizon. Une deuxième condition pour ces terminaux est de pouvoir basculer très rapidement le flux de communications d'un satellite arrivant à l'horizon vers un autre satellite plus en vue. Enfin, le gain de l'antenne doit être de l'ordre de 30 dBi pour les faisceaux émission et réception.

Des solutions ont été envisagées pour ce problème. Une première solution consiste à utiliser une antenne à balayage électronique, mais le domaine angulaire à couvrir étant très large (azimut de 0 à 360°, élévation de 10 à 90°), cette solution implique un nombre d'éléments actifs prohibitif : déphaseurs, amplificateurs faible bruit en réception et de puissance en émission, placés entre les éléments rayonnants et les déphaseurs pour couvrir leurs pertes ainsi que celles des diviseurs/combineurs. Leur coût est donc beaucoup trop élevé.

Une autre solution, issue du domaine militaire, permettant le suivi de plusieurs cibles mobiles trans-horizon est exposée dans le brevet US 3755 815, également présentée dans Microwave Journal (oct. 75, pp. 31-34). Elle consiste à utiliser un réseau d'éléments actifs émetteurs associé à une lentille dôme en matériau diélectrique, permettant la déflexion du faisceau jusqu'à l'horizon et au delà. Cette solution a pour inconvénient majeur d'être très chère à fabriquer du fait d'un besoin d'un réseau de plusieurs centaines d'éléments actifs.

D'autres moyens de déflexion de faisceau radio par utilisation de lentille diélectrique ou de lentille en guide d'ondes sont connus et par exemple exposés dans le « Lo and Lee - Antenna Handbook », mais leur technologie les limite à des angles de déflexion faibles, d'environ 10° autour de l'axe de la lentille, et sans suivi de cible.

On connaît encore dans le domaine des antennes micro-ondes (voir demande PCT WO 88 09066), des antennes comportant une antenne réseau plane, associée à une lentille micro-onde focalisante, et à une source cornet positionnable sur une portion de sphère focale, en fonction de la direction désirée du faisceau. Ces antennes présentent l'inconvénient que la surface rayonnante étant un réseau plein, la directivité de l'antenne diminue drastiquement aux faibles élévations (environ -7,6dB pour une élévation de 10°), alors que l'on recherche ici une directivité constante.

L'invention vise donc un dispositif simple, compact et bon marché à fabriquer, permettant le maintien de communications à haut débit de et vers une constellation de satellites défilants.

L'invention propose à cet effet une antenne d'émission / réception de signaux radioélectriques de et vers au moins un système émetteur / récepteur distant évoluant dans l'espace visible par rapport à ladite antenne, comportant une lentille focalisante d'ondes quasi-planes émises par ledit émetteur / récepteur distant, ayant une sphère focale S, au moins une source primaire d'émission / réception des signaux sous forme de faisceaux d'ondes quasi-sphériques, mobile sur une portion de la sphère S ;
caractérisée en ce qu'elle comporte :
a) une lentille déflectrice des ondes quasi-planes émises ou reçues par l'émetteur / récepteur distant ;
b) un moyen d'asservissement de la position de chaque source primaire d'émission / réception en relation avec la position connue d'un émetteur / récepteur distant.

Une telle combinaison de lentille focalisante et de lentille déflectrice permet d'obtenir la création d'un faisceau d'ondes planes et la déflexion de ce faisceau presque jusqu'à l'horizon, ledit faisceau étant émis ou capté par une source primaire d'émission / réception positionnée en un point de la sphère focale de la lentille focalisante correspondant à la position du satellite à chaque instant.

L'invention vise plus particulièrement un terminal-antenne d'émission / réception de signaux radioélectriques de et vers au moins deux systèmes émetteurs / récepteurs distants évoluant en des points différents de l'espace visible relativement audit dispositif, caractérisé en ce qu'il comporte
a) un moyen de détermination de la position à un instant donné desdits émetteurs / récepteurs distants en vue ;
b) un moyen de choix d'un émetteur / récepteur distant ;
c) une antenne selon la description précédente, comportant au moins deux sources primaires d'émission / réception :
d) un moyen de pilotage des déplacements des sources primaires d'émission / réception sur la sphère focale S adapté à éviter que les sources primaires ne viennent en collision ;
e) un moyen de commutation entre les sources primaires.

On atteint bien ainsi le maintien continu du transfert de données avec une constellation de satellites défilants. La réduction du nombre de sources primaires d'émission / réception à deux seulement entraîne une réduction importante du coût global de l'antenne. Par ailleurs, la taille du dispositif dans cette configuration est nettement inférieure à celle de la solution à deux antennes Cassegrain. On obtient ainsi un outil nettement plus simple que les dispositifs antérieurs, installable sur le toit d'une maison de façon classique, à un coût de fabrication réduit, ce type d'antenne devenant donc accessible à des particuliers.

Selon un mode particulier de réalisation, les sources primaires d'émission / réception de signaux sous forme de faisceaux d'ondes quasi-sphériques prennent la forme d'antennes cornets mobiles sur une portion de la sphère focale de la lentille focalisante.

Selon une mise en oeuvre préférée, les sources primaires d'émission / réception sont rendues mobiles chacune par l'action d'un couple de moteurs azimut / inclinaison.

Ces dispositions contribuent à un coût de fabrication réduit par l'utilisation de composants classiques et d'un montage mécanique simple.

Selon une forme préférée de réalisation, la lentille focalisante d'ondes quasi-planes en ondes quasi-sphériques est réalisée sous la forme d'une lentille convergente multifocale présentant un large domaine de balayage.

De façon plus particulière, le domaine de balayage est supérieur à 30° par rapport à l'axe de symétrie de révolution de la lentille focalisante par déplacement des sources primaires d'émission / réception d'ondes sur sa sphère focale.

Cette disposition permet d'atteindre un large domaine de balayage avec une technologie simple.

Selon une variante préférée, la lentille focalisante est réalisée sous la forme d'une lentille diélectrique convexe. Dans une variante avantageuse, cette lentille focalisante est réalisée sous la forme d'une lentille en guide d'ondes concave.

Ces modes de réalisation de la lentille focalisante à base de matériaux courants bon marché participent encore à une réduction du coût du dispositif, par opposition aux réseaux de composants actifs utilisés dans certaines solutions antérieures.

Selon un mode de réalisation préféré, la lentille défiectrice des ondes quasi-planes prend la forme d'une lentille dôme en diélectrique. Plus précisément, cette lentille dôme présente un profil moyen généralement hémisphérique.

Ce mode de réalisation conduit à la fois à une capacité de déflexion des faisceaux presque jusqu'à l'horizon, et constitue par ailleurs un radôme protecteur pour l'antenne.

Selon un mode de réalisation préféré, l'une au moins des lentilles comporte une couche d'adaptation (correspondant à un quart de longueur d'onde). Cette couche d'adaptation se compose préférentiellement d'un diélectrique d'indice égal à la racine carrée de l'indice du diélectrique de la lentille. Selon une variante avantageuse, la couche d'adaptation présente une épaisseur égale au quart de la longueur d'onde utilisée, percée d'une pluralité de trous borgnes.

Cette couche d'adaptation a pour effet de réduire les pertes et couplages générés par les phénomènes de réflexion à la surface des lentilles diélectriques.

La description et les dessins d'un mode préféré de réalisation de l'invention, donnés ci-après, permettront de mieux comprendre les buts et avantages de l'invention. Il est clair que cette description est donnée à titre d'exemple, et n'a pas de caractère limitatif. Dans les figures :
- la figure 1 représente schématiquement un terminal-antenne selon l'invention, ainsi que les éléments du système de transmission de données satellitaire au sein duquel il s'intègre ;
- la figure 2 représente plus précisément les principaux éléments constitutifs d'une antenne selon l'invention ;
- la figure 3 schématise un mode de réalisation d'un système mécanique de déplacement des sources primaires d'émission / réception sur une portion de la sphère focale S de la lentille focalisante, par des couples de moteur azimut/élévation ;
- la figure 4 montre le montage préféré de l'électronique de basculement des signaux des sources primaires d'émission / réception,
- la figure 5 montre une variante de ce même montage ;
- la figure 6 est une représentation schématique d'un deuxième mode de réalisation d'un système mécanique de déplacement des sources primaires d'émission/réception sur une portion de la sphère focale de la lentille focalisante, par des couples de moteurs azimut/élévation ;
- la figure 7 est une représentation schématique d'un mode de réalisation d'un système mécanique de déplacement des sources primaires d'émission/réception sur une portion de la sphère focale de la lentille focalisante, par des couples de moteurs X/ Y ;
- la figure 8 est une représentation schématique en perspective (figure 10a) et en coupe (figure 10b) d'un mode de réalisation des sources primaires d'émission/réception ;
- la figure 9 est une représentation du mécanisme de la figure 6 sur lequel sont montées des sources primaires d'émission/réception conformes au mode de réalisation de la figure 8 ;
- la figure 10 est une représentation schématique d'un mode de réalisation d'un système mécanique de déplacement des sources primaires d'émission/réception sur une portion de la sphère focale de la lentille focalisante, par des couples de moteurs azimut/élévation et X/Y ;
- la figure 11 est une représentation schématique d'un mode de réalisation d'un système mécanique de déplacement des sources primaires d'émission/réception sur une portion de la sphère focale de la lentille focalisante, par des couples de moteurs à axes obliques, une seule source étant active ;
- la figure 12 est une représentation du mode de réalisation de la figure 11 dans lequel les deux sources sont actives ;
- les figures 13 à 15 montrent des vues en coupe de trois variantes de lentille focalisante ;
- la figure 16 schématise une variante de forme hyperboloïde de la lentille déflectrice ; et

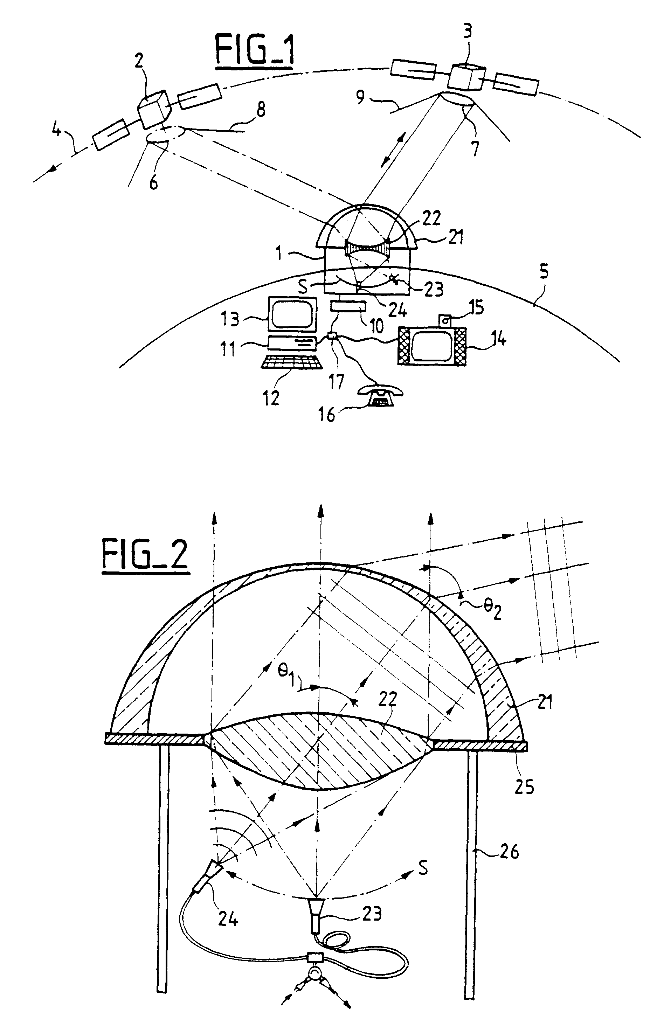

La figure 1 montre une antenne 1 en vue de deux satellites 2, 3 défilant sur une orbite 4 autour de la Terre 5. Les orbites des satellites sont déterministes et connues longtemps à l'avance. Il apparaît cependant des dérives (limitées à environ +- 0,5°) liées à la traînée atmosphérique résiduelle, à la pression de radiation solaire ou au contrôle d'attitude, qui sont corrigées à intervalles réguliers par les moteurs du satellite. Ces satellites sont dotés d'antennes de réception ainsi que d'antennes d'émission 6, 7 émettant des signaux en forte puissance dans des faisceaux directifs 8, 9.

Un particulier ou une entreprise utilisant le système de transmission de données est doté d'un terminal-antenne comportant d'une part une antenne 1, installée de façon fixe par exemple sur le toit comme une antenne satellitaire TV classique. Ce terminal-antenne comporte par ailleurs une électronique de contrôle 10 assurant le suivi des satellites, l'émission et la réception des signaux radioélectriques, et le décodage des informations cryptées pour lesquelles l'utilisateur dispose d'une habilitation (abonnement). Le terminal-antenne est également relié à un calculateur 11 de type micro-ordinateur PC. comportant un dispositif de mémoire non détaillé, un clavier 12 et un écran 13. Le dispositif de mémoire du micro-ordinateur comporte un enregistrement des informations caractérisant les orbites des satellites (éphémérides), et un logiciel permettant de calculer à un instant donné, en fonction de ces informations d'orbite et de la localisation géographique du terminal antenne (longitude, latitude), quels satellites sont en vue et sous quels angles géographiques locaux (azimut, élévation).

Le terminal-antenne 1, 10 est également relié dans cette réalisation à un téléviseur 14 pour la réception d'émission sur commande, ledit téléviseur pouvant être doté d'une caméra 15 permettant des applications de visioconférence, ainsi qu'à un téléphone 16 et un fax non représenté. Les différents appareils nécessitant le transfert de données via le terminal-antenne sont branchés sur un boîtier connecteur 17 éventuellement intégré au boîtier 10 contenant l'électronique de contrôle du terminal-antenne.

De façon plus détaillée, l'antenne 1 selon l'invention est illustrée dans la figure 2, et comporte, dans son mode préféré de réalisation, une lentille-dôme 21 permettant la déflexion des faisceaux radio en provenance d'un satellite pouvant être situé en toute direction de l'espace visible local, depuis le zénith et presque jusqu'à l'horizon, vers une lentille focalisante 22 transformant des ondes planes reçues du satellite en ondes sphériques (et réciproquement). L'antenne 1 comporte également deux sources primaires 23, 24 d'émission / réception de faisceaux d'ondes sphériques, un montage mécanique non représenté sur cette figure de positionnement de ces sources primaires d'émission / réception, et une structure mécanique 25 de support de ces éléments. Le dispositif placé sous les sources primaires et les lentilles est incorporé dans un cylindre métallique de protection 26.

La lentille dôme déflectrice 21 est de type connu. Elle se comporte en première approximation comme une lentille optique dans le domaine des hyperfréquences. Sa fonction est la déflexion de faisceaux d'ondes quasi-planes inclinées selon un angle Θ2 compris entre 0° et 80° à 85° en un faisceaux d'ondes quasi-planes inclinées selon un angle Θ1 compris entre 0° et 30° à 40°.

Elle est de forme quasi hémisphérique. Une telle lentille-dôme est décrite dans son principe dans « Microwave Journal » d'octobre 1975. Elle est réalisée par moulage de matériau diélectrique hyperfréquence, par exemple un matériau durcissant à chaud possédant un fort pouvoir déflecteur des rayons radios (coefficient ε permittivité diélectrique voisin de 10). De tels matériaux incluent le type TMM 10 (« Thermoset Microwave Material », matériau durcissant à chaud) de la famille des « Duroïds™ » produits par la société Rogers Corp, ou le K10 de Emerson & Cummings. Ces matériaux, à base par exemple de matrice en PTFE (PolyTetraFluorEthylène plus connu sous le nom commercial Tefion™) incluant des particules fines en céramique, sont quasiment insensibles à la pluie et aux intempéries, et sont suffisamment rigides pour ne pas être déformés par le vent. Ils peuvent donc remplir la fonction de radôme protecteur de l'ensemble du montage antenne.

La précision nécessaire pour la forme obtenue doit être de l'ordre du millimètre, du fait des longueurs d'ondes choisies (quelques centimètres), ce qui rend la fabrication simple car peu exigeante en précision (beaucoup moins que les lentilles d'appareils photographiques).

Le fort pouvoir déflecteur choisi permet de multiplier l'angle de balayage par 2 à 2,7, et donc de balayer pratiquement jusqu'à l'horizon avec des angles de faisceau internes de seulement 30 à 40°. Un pouvoir déflecteur supérieur engendrerait des phénomènes de reflet partiel des signaux en surface, ce qui dégraderait les performances de l'antenne complète. Le rayon intérieur de la lentille hémisphérique est de 25 cm, et son épaisseur varie d'environ 3 à 5 mm au sommet à une épaisseur comprise entre 3 et 7 cm au bord, selon l'indice du matériau choisi. Le profil extérieur de la lentille dôme est également proche d'une calotte sphérique. Dans l'exemple de réalisation considéré, le radôme a donc un diamètre extérieur d'environ 60 cm, ce qui est une taille comparable avec les antennes paraboliques de réception TV par satellite.

La lentille focalisante 22 est également une lentille hyperfréquence de type réalisé en matériau diélectrique. Elle se comporte comme une lentille quasi-optique en première approximation, avec un indice supérieur à 1 (la longueur d'onde dans le diélectrique étant inférieure à la longueur d'onde dans le vide). La géométrie de telles lentilles est donc convexe, elle est décrite dans le « Lo and Lee - Antenna Handbook », par exemple aux pages 16-19 à 16-59. La fonction de cette lentille est la transformation d'un faisceau d'ondes quasi-planes inclinées à un angle compris entre 0 et 35° en un faisceau d'ondes quasi-sphériques d'axe d'inclinaison voisin.

Cette lentille multifocale permet d'obtenir un balayage large (30 à 40° autour de l'axe de la lentille) par déplacement de la source primaire (émission et réception). Les lentilles de ce type sont connues dans la littérature pour un balayage de l'ordre de 10°, avec un faisceau très fin, mais l'extrapolation à 30 à 40° ne pose pas de problème particulier, dans la mesure où le gain de la lentille focalisante n'a pas besoin d'être important ici, son faisceau étant beaucoup plus large, sachant qu'il est connu de l'homme de l'art que l'ampleur du balayage possible avec un système focalisant s'exprime en nombre de largeurs de faisceau. Ici encore, une telle lentille est obtenue facilement par moulage d'un matériau de type composite de constante diélectrique forte (ε voisin de 10). Pour la même raison de longueur d'onde utilisée de quelques centimètres, la précision de moulage demandée est de l'ordre du millimètre seulement (proportionnelle à la longueur d'onde, qui est beaucoup plus élevée que pour les lentilles fonctionnant dans le spectre visible). Les matériaux composites décrits plus hauts pour la réalisation de la lentille dôme 21 sont également utilisés pour la réalisation de cette lentille focalisante 22. Le choix d'une lentille diélectrique permet d'obtenir une bande passante large et donc un débit de données important à travers l'antenne.

Le diamètre de la lentille focalisante est d'environ 35 cm pour un diamètre intérieur de la lentille dôme de 50 cm. La lentille focalisante est disposée horizontalement, son centre optique coïncidant avec celui de la lentille dôme hémisphérique. Le rayon de la sphère focale de cette lentille est d'environ 30 à 50 cm, selon les caractéristiques précises des matériaux choisis.

Sur une portion de cette sphère focale (typiquement 35° autour de l'axe de la lentille focalisante) sont disposées de façon mobile deux sources primaires 23, 24 d'émission / réception d'ondes sphériques. Ce sont des antennes cornets de type classique dans la réception satellitaire TV par exemple, pour laquelle des cornets illuminés par des réflecteurs paraboliques sont utilisés.

Les caractéristiques spécifiques des cornets utilisés ici sont liées d'une part à l'angle sous lequel ils voient la lentille focalisante et d'autre part à la longueur d'onde utilisée. En ce qui concerne les débits de données, il faut envisager pour des applications variées couvrant jeu interactif, télétravail, téléenseignement, vidéo interactive, transmission de données type Internet un volume émis maximum de l'ordre de 1 à 5 Mbps, et un volume reçu maximum un ordre de grandeur supérieur, c'est à dire de 10 à 50 Mbps. Par ailleurs, la position des cornets dans cette application conduit à une ouverture de faisceau de +- 30°. En acceptant une atténuation de -10 à -15 dB aux bords du faisceau, on calcule de façon classique le diamètre de l'embouchure du cornet, 50 à 60 mm de diamètre pour la bande de fréquence utilisée (bande Ku soit 11 à 14,3 Ghz).

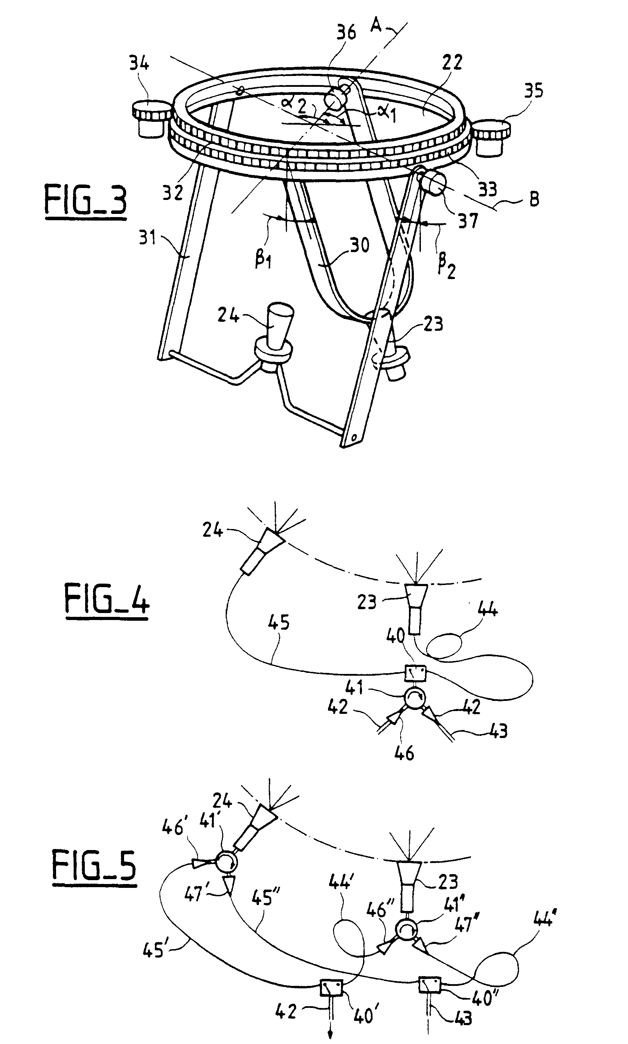

La figure 3 illustre un montage mécanique simple permettant de remplir la fonction de déplacement des deux cornets sur une portion de sphère, le déplacement des deux cornets étant réalisé de façon indépendante. Ce montage comporte principalement une double couronne concentrique 32, 33 et des balancelles 30, 31 supportant les cornets 23, 24. Pour assurer que la portion de sphère déterminée par les axes de liberté des cornets dans cette configuration correspond bien à la sphère focale de la lentille focalisante 22, celle-ci est disposée au centre de la double couronne, par un moyen de support mécanique non représenté ici, mais de nature classique.

Dans cette configuration, le premier cornet 23 est mu par un montage « intérieur » au montage supportant l'autre cornet 24. Ce premier cornet 23 est attaché par sa partie haute à une structure de support de type balancelle 30, réalisée en plastique rigide, dont les deux bras sont formés en arc de cercle dans leur partie basse pour éviter de gêner le passage de l'autre balancelle 31 supportant le deuxième cornet 24. La balancelle 30 est attachée selon un axe A à une couronne intérieure 32.

Le déplacement de la balancelle autour de la verticale est réalisé par un moteur d'inclinaison 36, par exemple de type moteur électrique pas à pas, disposé selon l'axe A à l'intérieur de la couronne 32. Ce déplacement permet d'atteindre une inclinaison β1, comprise entre -35° et +35°. Cette inclinaison est fonction de l'élévation du satellite : elle est nulle pour un satellite situé au zénith du lieu, et est de +-35° pour un satellite situé 10° au-dessus de l'horizon du lieu.

La couronne intérieure 32 est mue en rotation par un autre moteur électrique 34, également de type pas à pas, dont l'action permet de déterminer un azimut α1 compris entre 0° et 360°. Ce moteur est par exemple disposé à l'extérieur des deux couronnes, et entraîne la couronne intérieure en rotation par l'intermédiaire d'une couronne dentée.

On comprend donc que la combinaison des actions des deux moteurs azimut 34, inclinaison 36 permet de placer le premier cornet 23 en tout point choisi sur une calotte de la sphère focale d'angle d'ouverture +-35°, le cornet restant en permanence pointé vers le centre de la lentille focalisante. Le contrôle des deux moteurs 34, 36 permet de réaliser le suivi d'un satellite défilant, la vitesse de défilement du satellite correspondant à un déplacement du cornet par exemple d'une position d'élévation -35° à une élévation +35° en dix minutes environ.

Ainsi les deux moteurs azimut 34 et inclinaison 36 constitue un couple de moteurs azimut/élévation.

Le montage pour le second cornet est très similaire à celui décrit plus haut pour le premier cornet. Ce cornet 24 est attaché par sa partie inférieure à une structure balancelle 31, de taille suffisante pour ne pas risquer de gêner le passage de la balancelle intérieure. Cette balancelle est suspendue à une couronne extérieure 33. L'angle d'azimut α2 de l'antenne 24 est déterminé par l'action d'un moteur d'azimut 37, et l'angle d'inclinaison β2 est obtenu par l'action d'un moteur d'inclinaison 35 en tous points identiques aux moteurs de positionnement de l'autre antenne.

L'électronique d'asservissement et d'alimentation des moteurs pas à pas azimut / inclinaison des cornets n'est pas décrite ici mais est connue de l'homme de l'art.

En ce qui concerne le montage électronique permettant le basculement entre les deux cornets 23, 24, il est illustré sur la figure 4. Un canal de signal à émettre 42 comportant un amplificateur 46 (technologie «SSPA : Solid State Power Amplifier» : amplificateur état solide de puissance), et un canal de signal reçu 43 comportant un amplificateur 47 (technologie «LNA : Low Noise Amplifier» : amplificateur à faible bruit) sont reliés à un circulateur 41. Ce circulateur de nature connue est un composant passif provoquant la circulation du signal dans un sens donné entre ses trois ports et permettant un découplage émission / réception. Il est par exemple réalisé en ferrite. Ce circulateur 41 est relié à un commutateur 40 de connexion sélective à l'un ou l'autre des cornets. Le commutateur 40 est relié aux cornets par des câbles coaxiaux souples 44, 45. Il est de type connu à base de diode, et commute en moins d'une microseconde entre les deux cornets. Les composants annexes non mentionnés dans cette description, tels qu'alimentation électrique, sont de nature classique dans ce domaine.

Le mode de fonctionnement du dispositif comporte plusieurs phases. La première est l'installation du dispositif. Elle comporte la fixation mécanique de l'antenne sur le toit d'un édifice, en vérifiant les axes horizontaux et l'orientation nord / sud de l'antenne. Ensuite, l'antenne est connectée à son alimentation, à un micro-ordinateur pilote 11, et aux appareils utilisateurs TV 14, caméra 15, téléphone 16.

Dans la même phase, les éphémérides des satellites de la constellation (paramètres orbitaux de position et vitesse à un instant initial donné) sont entrés en mémoire de l'ordinateur destiné à servir d'hôte et de pilote de l'antenne. Ces données peuvent être fournies sous la forme d'une disquette.

Après entrée de l'heure locale et de la position terrestre du terminal antenne (latitude, longitude), l'ordinateur peut calculer la position actuelle des satellites de la constellation en fonction du temps écoulé depuis l'instant correspondant aux paramètres orbitaux mémorisés, et comparer ces positions à la zone de visibilité théorique depuis le terminal-antenne. Une procédure de calibration automatique du système est réalisable, avec pointage des 2 cornets 23, 24 sur la position théorique de satellites en vue, suivi pendant quelques instants, et vérification à partir des données acquises du niveau de puissance reçue et émise, de l'orientation spatiale de l'antenne, et de la qualité du suivi. Un diagnostic de corrections à apporter à l'installation est réalisé automatiquement en fonction de ces données de calibration.

Dans la phase d'utilisation courante, lorsque l'utilisateur met le système en marche (ordinateur en marche et alimentation de l'antenne), le logiciel de pilotage calcule la position des satellites à cette heure, et détermine donc quels satellites sont en vue à ce moment depuis cette position du globe. A partir des coordonnées du satellite le plus haut sur l'horizon, l'ordinateur 11 calcule la position correspondante que doit prendre un cornet sur la sphère focale de la lentille focalisante, envoie les ordres de mouvement aux moteurs pas à pas de déplacement de ce cornet, et connecte sélectivement ce cornet, correspondant au satellite le plus en vue, à l'électronique d'émission et de réception. La transmission et la réception des données sont alors possibles.

De façon continue, l'ordinateur calcule alors les mouvements correctifs à apporter à la position du cornet utilisé pour suivre le satellite, et pilote les moteurs de position en conséquence. La précision de positionnement requise pour un suivi régulier des satellites est déterminée par la largeur du lobe principal de l'antenne, et le taux d'atténuation acceptable du signal avant déplacement de ladite antenne. Dans le cas présent, une ouverture du lobe de 5° et une perte de signal acceptable de 0,3 dB conduisent à une précision de pointage de 0,75° du cornet par les moteurs, ce qui correspond pour une sphère focale de 50 cm de rayon à une précision de positionnement de 0.65 cm. Un suivi de satellite défilant en orbite basse conduit alors à un déplacement de 0,65 cm du cornet toutes les 6 secondes environ. Lors du suivi d'un satellite, le cornet assurant le flux de communications est prioritaire en déplacement sur l'autre cornet, le logiciel assurant à tout instant qu'aucune collision ne se produit en déplaçant au besoin le second cornet hors de la route du premier.

Suivant un critère d'élévation du satellite inférieure à 10° (satellite s'approchant de l'horizon), ou de baisse anormale du signal reçu (prise en compte d'arbres, de collines ou autres obstacles locaux, permanents ou non, ou passage dans la bande proche de l'arc géostationnaire, dans laquelle un brouillage par ou vers les satellites géostationnaires oblige à interrompre la liaison), l'ordinateur détermine le second satellite le plus en vue, et positionne le second cornet de façon correspondante à cette position. Puis la connexion sélective de ce cornet est réalisée et la poursuite de ce satellite est effectuée. Le temps de commutation entre les deux antennes cornets, de 1 microseconde dans la réalisation présentée, entraîne, pour un volume de données transmises de 1 Mbps à 50 Mbps au maximum, une perte de données correspondant à environ 1 à 50 bits. La reconstitution des données perdues est réalisée par utilisation de codes correcteurs d'erreurs transmis avec le signal.

La remise à jour des éphémérides peut être réalisée soit par entrée d'une disquette contenant les nouvelles données, soit par téléchargement par le réseau satellitaire lui-même, sur requête automatique du terminal.

Comme on l'a vu dans la description, les moteurs utilisés dans ce montage sont de puissance adaptée au déplacement d'une masse faible, inférieure au kg, ce qui permet l'utilisation de moteurs peu onéreux, très classiques dans le commerce. Ceci est un avantage par rapport à la solution de suivi de satellites utilisant deux antennes Cassegrain, pour laquelle les moteurs doivent être adaptés au positionnement précis de masse de quelques kg. et sont donc plus chers.

Les niveaux de précision requis sur le positionnement de l'antenne d'une part et le temps entre deux mouvements d'autre part garantissent qu'un montage mécanique classique et une électronique simple peuvent atteindre ces niveaux. On voit donc que la solution choisie est économique à fabriquer.

La mise en oeuvre telle qu'elle a été décrite fournit à la fois un dispositif de faible coût, les différents composants étant de type connu ou de spécifications de fabrication peu exigeantes, et un dispositif compact.

Il est à noter que le dispositif tel que décrit possède une symétrie de révolution autour de son axe vertical, avec une prise au vent indifférente à la direction du vent et un coefficient de traînée faible du fait du choix de géométries cylindriques et hémisphériques, ce qui représente un avantage par rapport aux antennes classiques sans radôme, pour lesquelles se posent des problèmes de mouvements entretenus lors de vent en rafales.

Dans une variante de réalisation de la lentille focalisante 22, un matériau quartz-silice est utilisé pour sa fabrication.

Dans une autre variante, le montage électronique permettant le basculement entre les deux cornets 23, 24, est remplacé par un montage illustré sur la figure 5. Dans ce montage, chaque cornet 23, 24 comporte un circulateur 41', 41" auquel sont reliés directement des modules d'amplification sur les signaux d'émission 46', 46" et de réception 47', 47". Les amplificateurs de signaux d'émission des deux sources primaires sont reliés par deux câbles coaxiaux 45', 44' à un dispositif de connexion sélective 40' auquel parvient le signal à émettre par un canal 42. De même, les amplificateurs à faible bruit des signaux reçus sont reliés par des câbles coaxiaux 45", 44" à un dispositif de connexion sélective 40" auquel est relié un canal 43 de signal reçu.

Cette disposition est destinée à réduire l'impact des pertes de signal se produisant dans les câbles coaxiaux souples, et estimées à 1 dB dans chaque câble de 0,5 m de longueur environ. Cette variante présente un coût supérieur par la duplication des amplificateurs, mais permet à puissance d'amplificateur égale, d'améliorer la Puissance Isotrope Rayonnée Equivalente (PIRE) de 1 dB environ, et le facteur de mérite en réception (G/T) d'environ 2 dB. A performances de l'antenne égales, ceci permet une réduction des dimensions de la lentille focalisante et de la lentille dôme, donc de toute l'antenne.

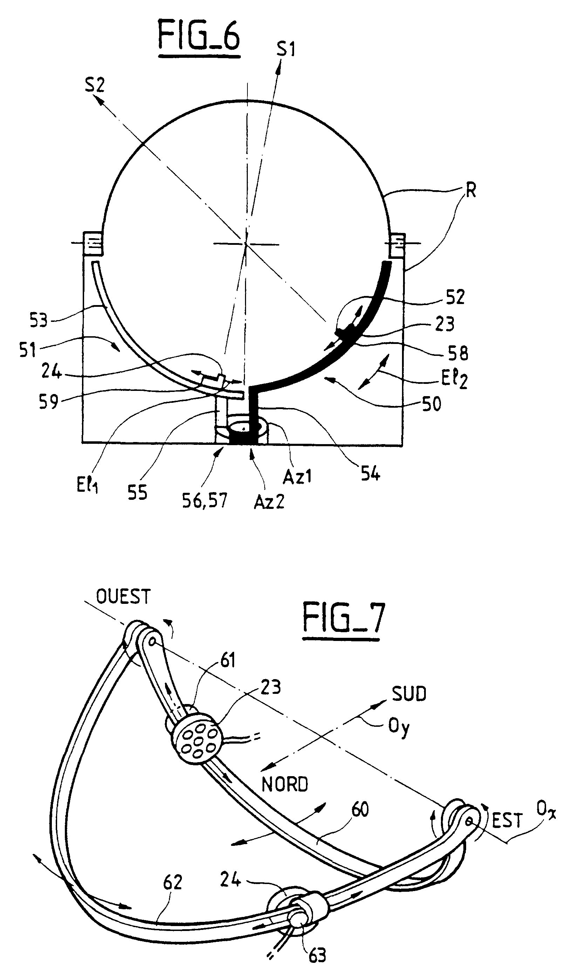

La figure 6 représente une variante du montage mécanique à moteurs azimut/élévation de la figure 3. Chaque source 23, 24 est montée sur un bras support 50, 51 comportant un arc de cercle 52, 53 concentrique à la sphère focale S positionné respectivement sur une moitié de la partie inférieure de la sphère focale et un arbre d'entraînement en rotation 54, 55 s'étendant parallèlement à la verticale et étant couplé à un moteur dit azimut 56, 57. Ainsi les sources primaires 23, 24 sont rendues mobiles suivant un azimut respectivement Az1 et Az2 distinct.

D'autre part, chaque source primaire 23, 24 est guidée sur son arc de cercle 52, 53 dans une glissière, pour son mouvement en élévation EI1, EI2 par des moteurs d'élévation 58, 59. Ces mouvements en élévation EI1 et EI2 permettent de définir les axes de visés S1 et S2 des deux satellites visibles.

Dans une variante relative à la méthode de suivi des satellites, une technique active remplace la technique passive décrite, dans laquelle comme on s'en souvient les données caractérisant la position des satellites sont simplement stockées à l'avance en mémoire de l'ordinateur, et pour laquelle on suppose que l'on positionne ainsi les sources primaires au bon endroit au bon moment, sans contrôle en temps réel. Dans la variante envisagée, chaque cornet comporte plusieurs récepteurs, par exemple quatre récepteurs disposés en matrice carrée, et fournit des signaux de sortie correspondant à une somme et à une différence des signaux reçus par les différents récepteurs. En début de poursuite d'un satellite donné, un cornet est positionné selon les données calculées par l'ordinateur 11. Puis l'analyse de l'évolution au cours du temps des signaux somme et différence permet de déterminer dans quelle direction le satellite se déplace et de le suivre en conséquence. Une remise à jour automatique des éphémérides mémorisés, en fonction des positions des satellites réellement observées, est éventuellement effectuée régulièrement par l'ordinateur hôte.

Dans une autre variante non représentée, dans laquelle l'utilisateur ne dispose pas d'un micro-ordinateur, le logiciel de suivi des satellites et la mémoire d'enregistrement des éphémérides sont intégrés dans un microprocesseur à mémoire, par exemple intégré dans un boîtier à placer sous un poste de TV, de la taille typique des décodeurs de TV cryptée traditionnels, et qui peut être confondu avec un modulateur / démodulateur adapté à des émissions cryptées. Une procédure de téléchargement des éphémérides à intervalles réguliers est alors prévue de façon automatique, sans intervention de l'utilisateur.

Il est à noter que dans toutes les variantes précédentes, si la bande de fonctionnement du système multimédia est la même que celles de la télévision directe par satellites, les deux sources peuvent être placées aux positions adaptées pour viser deux satellites géostationnaires : le même terminal-antenne sert alors alternativement à l'application multimédia, et à la réception des programmes diffusés par ces deux satellites, ces derniers peuvent être changés à volonté, en déplaçant les sources.

Dans encore une autre variante, un dispositif similaire à celui de l'invention est installé non plus au niveau du terminal sol, mais au niveau d'un satellite, par exemple satellite d'observation devant envoyer des images à quelques stations sol seulement dont la position peut être quelconque. Le principe de suivi des stations sol est analogue pour le satellite à celui de satellites défilant pour un terminal au sol. Dans cette application, la taille des stations sol peut être très nettement réduite (par exemple d'un facteur 10 si on réalise un gain de 20 dB sur le signal reçu par l'antenne) par rapport aux antennes de réception classiques adaptées à des satellites émettant en faisceau large, donc avec une puissance reçue faible. Cette disposition peut également améliorer la confidentialité des données émises. Enfin, la simplicité de la solution, son faible coût (par rapport en particulier aux antennes actives à très nombreux éléments) et sa faible consommation électrique rendent sa mise en oeuvre très favorable sur satellite.

La portée de la présente invention ne se limite pas aux détails des formes de réalisation ci-dessus considérées à titre d'exemple, mais s'étend au contraire aux modifications à la portée de l'homme de l'art.

Dans une autre variante de montage mécanique de support des sources mobiles, représentée sur la figure 7, chaque source primaire 23, 24 est rendue mobile par l'action d'un couple de moteur dit X/Y. Un arc semi-circulaire 60 est attaché en deux points diamétralement opposés, par exemple Est et Ouest, de la sphère focale. Une source 23 est mobile le long de cet arc faisant office de glissière par l'action d'un moteur électrique secondaire 61 attaché à la source. La deuxième source 24 est montée de façon identique sur un autre arc 62 en étant guidée par un moteur secondaire 63. Bien que cela ne soit pas représenté, chaque arc semi circulaire 60 et 62 est entraîné en rotation autour d'un axe primaire Ox par un moteur primaire constituant le deuxième moteur du couple de moteurs X/Y, l'arc de cercle 60 ayant un rayon inférieur à l'arc de cercle 62. Les moteurs secondaires 61 et 63 permettent ainsi de rendre les sources mobiles autour d'un axe secondaire Oy lui-même rendu mobile par rapport à l'axe primaire par l'intermédiaire des moteurs primaires, l'axe secondaire Oy étant toujours orthogonal à l'axe primaire Ox. L'une des sources émet et reçoit vers les satellites "nord", l'autre émet et reçoit vers les satellites "sud", ceci pour éviter les conflits de position des sources. Les repositionnements relatifs des deux bras ou arcs sont possible si l'un passe au-dessus de la lentille.

Les montages des figures 6 et 7 présentent un avantage de compacité par rapport aux montages des figures 3 et 5. Ils sont en outre plus adaptés à l'obtention d'angles élevés d'éclairage de la lentille par les sources, ceci étant nécessaire dans le cas d'utilisation de lentille sphérique focalisante.

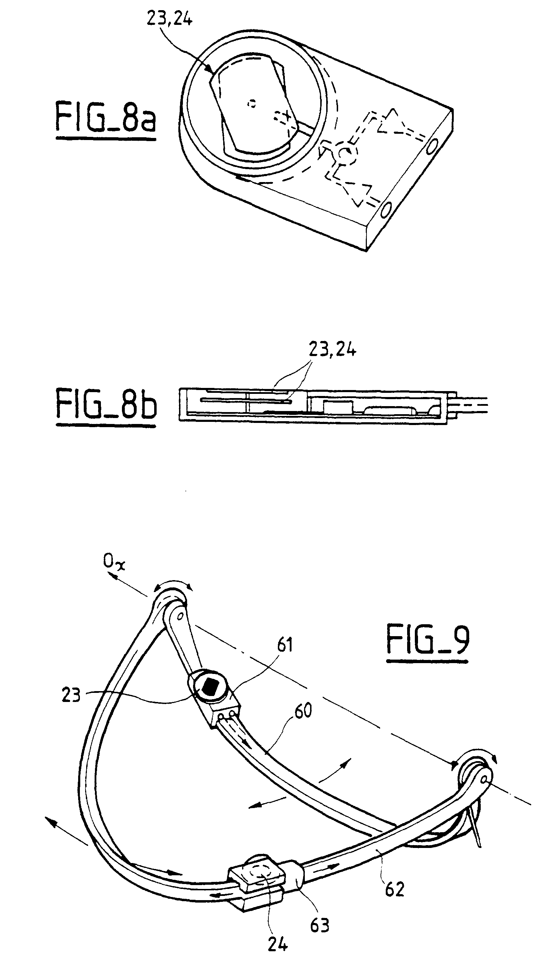

Dans une autre variante de connexion des amplificateurs montés avant les sources primaires, utilisant un montage mécanique des sources conforme à la figure 7 et tels que représentée à la figure 9, chaque arceau est un guide d'ondes, transportant donc le signal hyperfréquence, et un joint tournant classique est monté à l'articulation des arceaux. Cette disposition permet de réduire les pertes de signal et donc d'éloigner les amplificateurs des sources primaires.

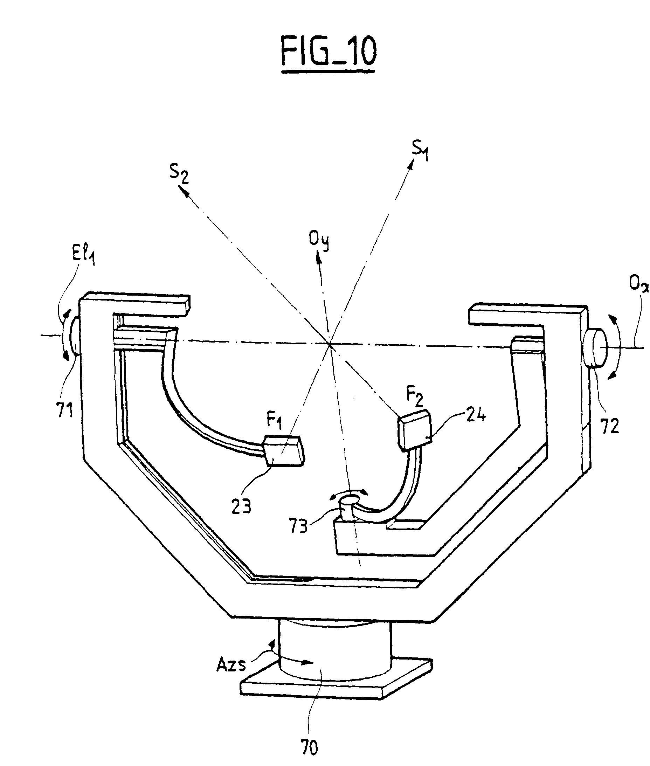

Dans une autre variante de montage mécanique de support des sources mobiles, représentée sur la figure 10 une première source primaire 23 est rendue mobile par l'action d'un couple de moteurs azimut/élévation 70, 71 et la seconde source primaire 24 est rendue mobile par l'action d'un couple de moteurs X/Y 72, 73, le moteur azimut 70 de la première source primaire entraînant en outre l'ensemble de l'antenne.

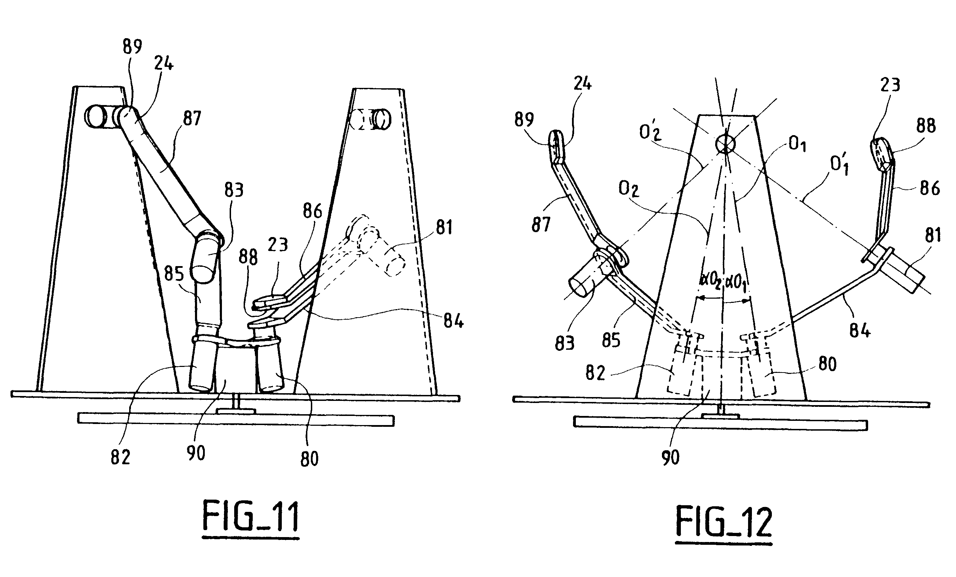

Dans une autre variante de montage mécanique de support des sources mobiles, représentée sur les figures 11 et 12 chaque source primaire 23, 24 est rendue mobile par l'action d'un couple de moteurs à axes de rotation oblique 80, 81 et 82, 83.

Chaque support de source primaire comporte un bras 84, 85 et un avant-bras 86, 87, la source primaire 23, 24 étant fixée sur une extrémité libre 88, 89 de l'avant-bras 86, 87. Le premier moteur 80, 82 entraîne le bras 84, 85 en rotation autour d'un axe oblique primaire O₁, O₂ décalé d'un angle primaire αₒ₁, αₒ₂, par rapport à la verticale, le deuxième moteur 81, 83 entraînant l'avant-bras 86, 87 en rotation par rapport au bras 84, 85 autour d'un axe oblique secondaire O'₁, O'₂ décalé par rapport à la verticale d'un angle secondaire α'ₒ₁, α'ₒ₂ supérieur à l'angle primaire αₒ₁, αₒ₂, les axes primaires et secondaires de chaque couple de moteurs s'étendant de part et d'autre de la verticale.

On peut prévoir également que le terminal, dans lequel l'ensemble lentille focalisante/lentille déflectrice est monté sur un support distinct de celui des sources primaires, comporte en outre un moteur supplémentaire 90 destiné à entraîner le support dudit ensemble de telle sorte qu'il s'étende sensiblement parallèlement aux faisceaux.

Bien entendu, l'invention n'est pas limitée aux exemples décrits précédemment, mais peut s'appliquer à d'autres réalisations telles que par exemple les antennes actives à balayage, et d'une manière plus générale à toute réalisation utilisant un ou plusieurs moyen(s) équivalent(s) aux moyens décrits, pour remplir les mêmes fonctions, en vu d'obtenir les mêmes résultats, tels que par exemple chaque source primaire, montée sur un support, est rendue mobile par l'action d'au moins un couple de moteurs de manière à obtenir un déplacement de chaque source sur au moins la moitié inférieure de la sphère focale.

En outre, dans une variante de réalisation des éléments optiques, la lentille focalisante et la lentille déflectrice sont remplacées par une seule et même lentille, sous la forme d'une lentille sphérique focalisante fixe en matériau diélectrique, qui focalise les faisceaux hyperfréquences parallèles vers une sphère focale concentrique avec la lentille. Les sources de l'antenne peuvent être montées selon un dispositif mécanique décrit plus haut, et mobiles sur cette sphère focale. Ces sources sont, soit des cornets du genre considéré ci-dessus, soit des pavés imprimés du type dit "patches". Ces pavés peuvent de leur côté soit être uniques par source (figure 8a, 8b), soit groupés en de petits réseaux (figure 7) permettant de compenser d'éventuelles altérations du système focalisant. Cette variante à pavés, étant plus compacte, est particulièrement intéressante dans le cas de lentilles sphériques où l'espace pour déplacer les sources est plus réduit, d'autant plus que l'on cherche à limiter l'encombrement global du terminal-antenne

Il est également possible d'envisager un dispositif à trois sources, dont une est montée de façon fixe sur la lentille sphérique, en visée d'un satellite de l'arc géostationnaire. Une telle disposition permet, avec une seule antenne, soit les applications multimédia à haut débit d'information vers les satellites défilants (qui nécessitent deux sources mobiles), soit la réception d'images de télévision directe depuis un satellite géostationnaire (même s'il utilise une autre bande de fréquences que le système multimédia), au choix de l'utilisateur, et sans délai de repositionnement des sources mobiles.

Une autre variante de remplacement des câbles reliés aux sources primaires consiste à utiliser des fibres optiques pour assurer l'émission et/ou la réception des signaux. Ces fibres présentent un avantage de souplesse en suivant le déplacement de l'ensemble source et amplificateur. Le support peut lui-même être utilisé comme conducteur optique pour transmettre les informations de mouvement du moteur déplaçant la source primaire.

Le dispositif comporte alors une diode électro luminescente pour l'émission de lumière (sur une bande de quelques centaines de MHz) et une photodiode pour la réception de données optiques. Un miroir est monté au niveau du point d'attache des arceaux, pour la transmission de lumière vers le tube conducteur optique.

Le tube peut également servir à la transmission de courant électrique pour l'alimentation de la source primaire, de l'amplificateur et du moteur de déplacement, en comportant deux pistes conductrices espacées et en disposant des contacteurs au niveau de la source pour la réception de ce courant électrique.

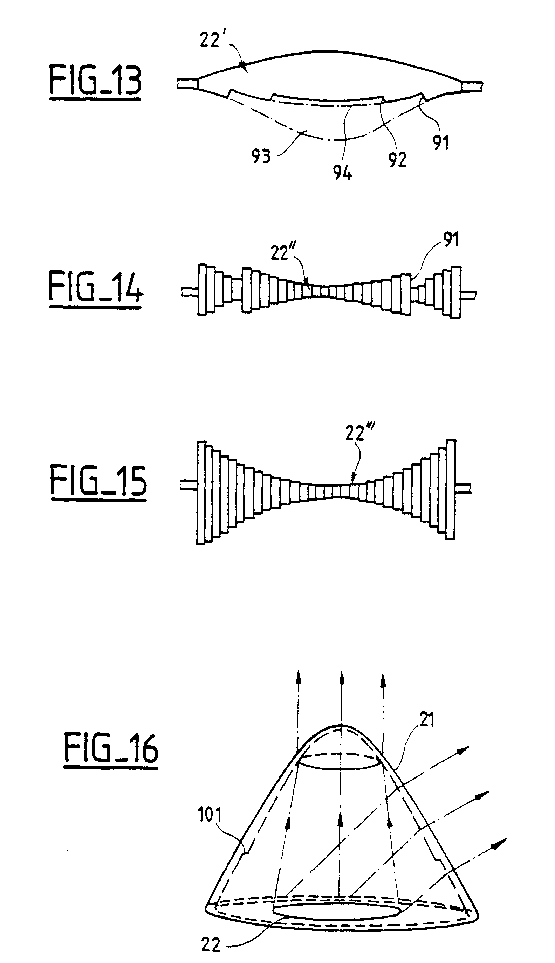

La lentille focalisante 22 réalisée en diélectrique peut être remplacée par d'autres lentilles remplissant la même fonction. De telles variantes sont illustrées sur les figures 13 à 16. Comme on le voit figure 13, une première variante consiste à « zoner » l'antenne diélectrique, c'est à dire à enlever des épaisseurs de matériau de sorte que le retard de phase reste constant (à un multiple de 360° près) avant et après zonage. Dans cette figure, deux bords 91, 92 correspondant à l'enlèvement de zones 93, 94 ont été réalisées, permettant ainsi de réduire le volume et la masse de la lentille. Cette technique de zonage présente l'inconvénient de créer des baisses de performance dues aux reflets sur les bords du zonage, et le nombre de décrochages du profil de la lentille doit donc être autant que possible réduit.

Une seconde variante de lentille focalisante, présentée figure 14, consiste à remplacer le matériau diélectrique par une lentille en guide d'onde 22"', éventuellement zonée (antenne 22" présentant un décrochement 91, illustrée sur la figure 14). Ces lentilles en guide d'onde sont du domaine connu. Leur principe est de synthétiser une lentille d'indice inférieur à 1 (car la longueur d'onde dans le guide d'onde est supérieure à la longueur d'onde dans le vide), et donc devant être de courbure inverse de celle des lentilles diélectriques. à focalisation équivalente. On a donc ici une lentille concave. Cette option présente l'inconvénient de fournir une bande passante moins large qu'une lentille diélectrique, mais présente un coût de fabrication moindre, la lentille étant par exemple fabriquée par formage d'un bloc d'aluminium selon la concavité souhaitée et simple perçage dans ce bloc d'une série de trous parallèles disposés en quinconce.

Pour les lentilles diélectriques, il peut être nécessaire de réduire les réflexions aux interfaces diélectrique / air si l'on veut améliorer les performances de l'antenne. Une couche d'adaptation d'une épaisseur d'un quart de longueur d'onde peut alors avantageusement être ménagée. Elle est avantageusement réalisée par exemple sous la forme d'un revêtement en diélectrique d'indice égal à la racine carrée de l'indice du diélectrique √n. Une autre variante consiste à percer sur une épaisseur d'un quart de longueur d'onde une pluralité de trous borgnes, en densité telle que la moyenne de l'indice du diélectrique restant et de l'indice de l'air dans les trous équivaille à un indice égal à la racine carrée de l'indice du diélectrique √n. Cette méthode, qui revient à « simuler » un diélectrique de permittivité déterminée, est classique.

Dans la description, une lentille déflectrice en forme de dôme hémisphérique a été mentionnée, ce qui est le mode le plus classique. Une variante d'exécution consiste à utiliser une géométrie hyperboloïde ou paraboloïde de courte focale, comme illustré sur la figure 16. Dans cette figure, on voit une lentille déflectrice en forme de dôme hyperboloïde 21, une lentille focalisante 22, la lentille dôme étant ici zonée (décrochage 101 visible sur la figure). Ceci autorise une augmentation de la surface éclairée aux angles d'inclinaison forts (élévation faible du satellite sur l'horizon), et permet donc de compenser une baisse de gain de la lentille focalisante dans ces conditions. Une lentille dôme de 35 à 40 cm de hauteur permet alors d'obtenir une surface rayonnante utile équivalente à un disque de 30 cm de diamètre.

## Revendications

1. Dispositif antenne d'émission / réception de signaux radioélectriques de et vers au moins un système (2, 3) émetteur / récepteur distant évoluant dans l'espace visible par rapport à ladite antenne, comportant une lentille focalisante (22) d'ondes quasi-planes émises par ledit émetteur / récepteur distant, ledit moyen ayant une sphère focale S, au moins une source primaire (23, 24) d'émission / réception des signaux sous forme de faisceaux d'ondes quasi-sphériques, mobile sur une portion de la sphère S ;
**caractérisée en ce qu'**elle comporte en combinaison
a) une lentille déflectrice (21) des ondes quasi-planes émises ou reçues par l'émetteur / récepteur distant ;
b) un moyen d'asservissement (10, 11) de la position de chaque source primaire d'émission / réception en relation avec la position connue d'un émetteur / récepteur distant.

2. Dispositif terminal-antenne d'émission / réception de signaux radioélectriques de et vers au moins deux systèmes (2, 3) émetteurs / récepteurs distants évoluant en des points différents de l'espace visible relativement audit terminal-antenne, **caractérisé en ce qu'**il comporte :
a) un moyen de détermination de la position à un instant donné desdits émetteurs / récepteurs distants en vue ;
b) un moyen de choix d'un émetteur / récepteur distant ;
c) une antenne (1) selon la revendication 1, comportant au moins deux sources primaires (23, 24) d'émission / réception ;
d) un moyen (11) de pilotage des déplacements des sources primaires d'émission / réception sur la sphère focale S adapté à éviter que les sources primaires ne viennent en collision ;
e) un moyen (40) de commutation entre les sources primaires.

3. Dispositif selon la revendication 2, **caractérisé en ce qu'**il comporte en outre un moyen de récupération de données perdues pendant le temps de commutation.

4. Dispositif selon l'une quelconque des revendications 1 à 3, **caractérisé en ce que** les sources primaires (23, 24) d'émission / réception des signaux sous forme de faisceaux d'ondes quasi-sphériques prennent la forme d'antennes cornets mobiles sur une portion de la sphère focale S de la lentille focalisante (22) des ondes quasi-sphériques en ondes quasi-planes.

5. Dispositif selon l'une quelconque des revendications 1 à 4, **caractérisé en ce qu'**au moins une source primaire (23, 24) d'émission / réception comporte un module d'amplification (41, 46, 47) des signaux transmis et reçus.

6. Dispositif selon l'une quelconque des revendications 1 à 5, **caractérisé en ce que** la lentille focalisante (22) d'ondes quasi-planes en ondes quasi-sphériques est réalisée sous la forme d'une lentille convergente multifocale présentant un large domaine de balayage.

7. Dispositif selon la revendication 6, **caractérisé en ce que** le domaine de balayage est supérieur à 30° par rapport à l'axe de symétrie de révolution de la lentille focalisante par déplacement des sources primaires (23, 24) d'émission / réception d'ondes sur sa sphère focale S.

8. Dispositif selon l'une quelconque des revendications 6 ou 7, **caractérisé en ce que** la lentille focalisante (22) est réalisée sous la forme d'une lentille diélectrique convexe.

9. Dispositif selon l'une quelconque des revendications 6 ou 7, **caractérisé en ce que** la lentille focalisante (22) est réalisée sous la forme d'une lentille en guide d'ondes concave.

10. Dispositif selon l'une quelconque des revendications 6 à 9, **caractérisé en ce que** la lentille focalisante (22) est « zonée ».

11. Dispositif selon l'une quelconque des revendications 1 à 10, **caractérisé en ce que** la lentille déflectrice (21) des ondes quasi-planes prend la forme d'une lentille dôme en diélectrique.

12. Dispositif selon la revendication 11, **caractérisé en ce que** la lentille dôme (21) présente un profil moyen généralement hémisphérique.

13. Dispositif selon la revendication 11, **caractérisé en ce que** la lentille dôme (21) présente des profils intérieurs et extérieurs généralement paraboliques, elliptiques ou hyperboliques.

14. Dispositif selon l'une quelconque des revendications 1 à 13, **caractérisé en ce qu'**il comporte un moyen d'isolation du dispositif contre les conditions de l'environnement extérieur confondu avec la lentille déflectrice (21).

15. Dispositif selon l'une quelconque des revendications 11 à 14, **caractérisé en ce que** la lentille déflectrice (21) présente une épaisseur croissante depuis son sommet jusqu'à sa base.

16. Dispositif selon l'une quelconque des revendications 1 à 15, **caractérisé en ce que** l'une au moins des lentilles (21, 22) comporte une couche d'adaptation de type quart d'onde.

17. Dispositif selon la revendication 16, **caractérisé en ce que** la couche d'adaptation se compose d'un diélectrique d'indice égal à la racine carrée de l'indice du diélectrique de la lentille.

18. Dispositif selon la revendication 16, **caractérisé en ce que** la couche d'adaptation présente une épaisseur égale au quart de la longueur d'onde utilisée, percée d'une pluralité de trous borgnes avec une densité de perçages adaptée à créer un indice équivalent, égal à la racine carrée de l'indice du diélectrique de la lentille.

19. Dispositif selon l'une quelconque des revendications 2 à 18, **caractérisé en ce que** les émetteurs / récepteurs distants sont des satellites d'une constellation, et que le moyen de détermination de la position à un instant donné des satellites en vue comprend :
- une base de données des paramètres orbitaux de chaque satellite à un instant donné ;
- un moyen de mémorisation des paramètres terrestres de position du terminal antenne ;
- un logiciel de calcul de la position actuelle de chaque satellite à partir des paramètres d'orbite initiaux et du temps écoulé depuis l'instant initial ;
- un logiciel de comparaison de la position orbitale avec la zone angulaire visible depuis la position du terminal antenne;
- un moyen de remise à jour régulière de la base de données de paramètres orbitaux des émetteurs / récepteurs distants.

20. Dispositif selon l'une quelconque des revendications 1 à 19, **caractérisé en ce que** les sources primaires (23, 24) d'émission / réception comportent des moyens de détection de l'écart de pointage par rapport au faisceau d'ondes reçues d'un émetteur / récepteur distant en déplacement.

21. Dispositif selon l'une quelconque des revendications 1 à 20, **caractérisé en ce que** chaque source primaire (23, 24), montée sur un support, est rendue mobile par l'action d'au moins un couple de moteurs de manière à obtenir un déplacement de chaque source sur au moins la moitié inférieure de la sphère focale.

22. Dispositif selon l'une quelconque des revendications 1 à 21 dans lequel l'ensemble lentille focalisante/lentille sphérique est monté sur un support distinct de celui des sources primaires, **caractérisé en ce qu'**il comporte en outre un moteur supplémentaire (90) destiné à entraîner le support dudit ensemble de telle sorte qu'il s'étende sensiblement parallèlement aux faisceaux.

23. Dispositif selon l'une quelconque des revendication 1 à 22, **caractérisé en ce que** chaque source primaire (23, 24) est rendue mobile par l'action d'un couple de moteurs azimut/élévation (34, 35, 56, 57 ; 36, 37, 58, 59).

24. Dispositif selon la revendication 23, **caractérisé en ce que** chaque support de source primaire comporte un moyen formant balancelle (30, 31), sur lequel la source primaire (23, 24) est montée de manière fixe. chaque balancelle étant rendue mobile d'une part suivant un axe par un moteur dit azimut (34, 35) du couple de moteurs, et d'autre part par rapport à la verticale par l'autre moteur dit d'inclinaison (36, 37) du couple de moteur.

25. Dispositif selon la revendication 23, **caractérisé en ce que** chaque support de source primaire comporte un bras (50, 51) formant un arc de cercle concentrique à la sphère focal, positionné respectivement sur une moitié de la partie inférieure de la sphère focale, chaque bras étant rendu mobile suivant un azimut par un moteur dit azimut (56, 57) du couple de moteurs, et chaque source primaire étant rendue mobile le long de l'arc par l'autre moteur (58, 59) du couple de moteur.

26. Dispositif selon l'une quelconque des revendications 1 à 22, **caractérisé en ce que** chaque source primaire est rendue mobile par l'action d'un couple de moteurs dit X/Y, le premier moteur assurant une rotation de chaque source primaire autour d'un axe primaire Ox sensiblement horizontal et le deuxième moteur (61, 63) assurant une rotation de chaque source primaire autour d'un axe secondaire Oy rendu mobile par rapport à l'axe primaire par le premier moteur en étant constamment orthogonal à cet axe primaire.

27. Dispositif selon l'une quelconque des revendications 1 à 22, **caractérisé en ce que** une première source primaire (23) est rendue mobile par l'action d'un couple de moteurs azimut/élévation (70, 71) et la seconde source primaire (24) est rendue mobile par l'action d'un couple de moteurs X/Y (72, 73), le moteur azimut (70) de la première source primaire (23) entraînant en outre l'ensemble de l'antenne (1).

28. Dispositif selon l'une quelconque des revendications 1 à 22, **caractérisé en ce que** chaque source primaire (23, 24) est rendue mobile par l'action d'un couple de moteurs (80, 82 ; 81, 83) à axes de rotation oblique (O₁, O₂ ; O'₁, O'₂).

29. Dispositif selon la revendication 28, **caractérisé en ce que** chaque support de source primaire (23, 24) comporte un bras (84, 85) et un avant-bras (86, 87), la source primaire étant fixée sur une extrémité libre (88, 89) de l'avant-bras, le premier moteur (80, 82) entraînant le bras en rotation autour d'un axe primaire (O₁, O₂) oblique décalé d'un angle primaire (αₒ₁, αₒ₂) par rapport à la verticale, le deuxième moteur (81, 83) entraînant l'avant-bras en rotation par rapport au bras autour d'un axe secondaire (O'₁, O'₂) oblique décalé par rapport à la verticale d'un angle secondaire (α'ₒ₁, α'ₒ₂) supérieur à l'angle primaire (αₒ₁, αₒ₂), les axes primaires et secondaires de chaque couple de moteurs s'étendant de part et d'autre de la verticale.

## Patentansprüche

1. Sende/Empfangsantennenanordnung für Funksignale von und zu wenigstens einem fernen Sende/Empfangssystem (2, 3), das sich im sichtbaren Raum gegenüber der Antenne bewegt, welche eine Fokussierungslinse (22 für quasi-ebene Wellen, die vom fernen Sender/Empfänger ausgesandt werden, wobei das Mittel einen Brennpunktsbereich S aufweist, wenigstens eine primäre Sende/Empfangsquelle (23, 24) für Signale in Form von Quasi-Kugelwellen aufweist, die auf einem Abschnitt des Bereichs S beweglich ist;
**dadurch gekennzeichnet, dass** sie in Kombination umfasst:
a) eine Ablenklinse (21) für quasi-ebene Wellen, die vom fernen Sender/Empfänger ausgesandt oder empfangen werden;
b) ein Regelungsmittel (10, 11) für die Position jeder primären Sende/Empfangsquelle im Verhältnis zur bekannten Position eines fernen Senders/Empfängers.

2. Sende/Empfangsanordnung aus Endgerät und Antenne für Funksignale von und zu wenigstens zwei fernen Sende/Empfangssystemen (2, 3), die sich an verschiedenen Punkten des Raumes relativ zum Endgerät/Antenne bewegen, **dadurch gekennzeichnet, dass** sie aufweist:
a) ein Mittel zum Bestimmen der Position der sichtbaren fernen Sender/Empfänger zu einem gegebenen Zeitpunkt;
b) Mittel zur Auswahl eines fernen Senders/Empfängers;
c) eine Antenne (1) nach Anspruch 1, die wenigstens zwei primäre Sende/Empfangsquellen (23, 24) aufweist;
d) ein Mittel (11) zum Steuern der Verschiebungen der primären Sende/Empfangsquellen im Brennpunktsbereich S, das dafür ausgelegt ist zu vermeiden, **dass** die primären Quellen zusammenprallen;
e) ein Mittel (40) zum Umschalten zwischen den primären Quellen.

3. Anordnung nach Anspruch 2, **dadurch gekennzeichnet, dass** sie außerdem ein Mittel zur Wiedergewinnung von während der Umschaltzeit verlorenen Daten aufweist.

4. Anordnung nach einem der Ansprüche 1 bis 3, **dadurch gekennzeichnet, dass** die primären Sende/Empfangsquellen (23, 24) für die Signale in Form von Quasi-Kugelwellenstrahlen die Form von Hornantennen annehmen, die in einem Abschnitt des Brennpunktsbereichs S der fokussierenden Linse (22) für die Quasi-Kugelwellen zu quasi-ebenen Wellen beweglich sind.

5. Anordnung nach einem der Ansprüche 1 bis 4, **dadurch gekennzeichnet, dass** wenigstens eine primäre Sende/Empfangsquelle (23, 24) ein Verstärkungsmodul (41, 46, 47) für die gesendeten und empfangenen Signale aufweist.

6. Anordnung nach einem der Ansprüche 1 bis 5, **dadurch gekennzeichnet, dass** die fokussierende Linse (22) für quasi-ebene Wellen zu Quasi-Kugelwellen in der Form einer konvergenten Linse mit mehreren Brennpunkten ausgeführt ist, die ein großes Abtastungsgebiet aufweist.

7. Anordnung nach Anspruch 6, **dadurch gekennzeichnet, dass** das Abtastungsgebiet in Bezug auf die Symmetrieachse der Drehung der fokussierenden Linse durch Verschiebung der primären Sende/Empfangsquellen (23, 24) für Wellen auf dem Brennpunktsbereich S größer als 30° ist.

8. Anordnung nach einem der Ansprüche 6 oder 7, **dadurch gekennzeichnet, dass** die fokussierende Linse (22) in Form einer konvexen dielektrischen Linse ausgeführt ist.

9. Anordnung nach einem der Ansprüche 6 oder 7, **dadurch gekennzeichnet, dass** die fokussierende Linse (22) in Form einer konkaven Wellenleiterlinse ausgeführt ist.

10. Anordnung nach einem der Ansprüche 6 bis 9, **dadurch gekennzeichnet, dass** die fokussierende Linse (22) "streifig" ist.

11. Anordnung nach einem der Ansprüche 1 bis 10, **dadurch gekennzeichnet, dass** die Ablenklinse (21) für die quasi-ebenen Wellen die Form einer Kuppellinse aus einem Dielektrikum annimmt.

12. Anordnung nach Anspruch 11, **dadurch gekennzeichnet, dass** die Kuppellinse (21) ein im Allgemeinen halbkugelförmiges mittleres Profil aufweist.

13. Anordnung nach Anspruch 11, **dadurch gekennzeichnet, dass** die Kuppellinse (21) im Allgemeinen parabolische, elliptische oder hyperbolische innere und äußere Profile aufweist.

14. Anordnung nach einem der Ansprüche 1 bis 13, **dadurch gekennzeichnet, dass** sie ein Mittel zur Isolierung der Anordnung gegenüber den Bedingungen der äußeren Umgebung aufweist, das mit der Ablenklinse (21) vereinigt ist.

15. Anordnung nach einem der Ansprüche 11 bis 14, **dadurch gekennzeichnet, dass** die Ablenklinse (21) eine vom Scheitel bis zur Basis wachsende Dicke aufweist.

16. Anordnung nach einem der Ansprüche 1 bis 15, **dadurch gekennzeichnet, dass** wenigstens eine der Linsen (21, 22) eine Anpassungsschicht vom Viertelwellentyp aufweist.

17. Anordnung nach Anspruch 16, **dadurch gekennzeichnet, dass** die Anpassungsschicht aus einem Dielektrikum mit einem Index gleich der Quadratwurzel des Index des Dielektrikums der Linse besteht.

18. Anordnung nach Anspruch 16, **dadurch gekennzeichnet, dass** die Anpassungsschicht eine Dicke gleich einem Viertel einer verwendeten Wellenlänge aufweist, die mit einer Vielzahl von Blindlöchern mit einer Lochungsdichte versehen ist, die dafür ausgelegt ist einen äquivalenten Index zu erzeugen, der gleich der Quadratwurzel des Index des Dielektrikums der Linse ist.

19. Anordnung nach einem der Ansprüche 2 bis 18, **dadurch gekennzeichnet, dass** die fernen Sender/Empfänger Satelliten mit einer Konstellation sind, und das Mittel zur Bestimmung der Position der sichtbaren Satelliten zu einem gegebenen Zeitpunkt umfasst:
- eine Datenbasis aus den Umlaufbahnparametern jedes Satelliten zu einem gegebenen Zeitpunkt;
- ein Mittel zur Speicherung der terrestrischen Parameter der Position des Endgeräts/Antenne;
- eine Berechnungssoftware für die aktuelle Position jedes Satelliten aus den anfänglichen Umlaufbahnparametern und der seit dem Anfangszeitpunkt vergangenen Zeit;
- eine Software zum Vergleich der Umlaufbahnposition mit dem von der Position des Endgeräts/Antenne aus sichtbaren Winkelbereich;
- ein Mittel zur regelmäßigen Aktualisierung der Datenbasis aus Umlaufbahnparametern der fernen Sender/Empfänger.

20. Anordnung nach einem der Ansprüche 1 bis 19, **dadurch gekennzeichnet, dass** die primären Sende/Empfangsquellen (23, 24) Mittel zur Erfassung der Richtabweichung in Bezug auf die von einem in Bewegung befindlichen, fernen Sender/Empfänger empfangenen Wellenbündel aufweist.

21. Anordnung nach einem der Ansprüche 1 bis 20, **dadurch gekennzeichnet, dass** jede primäre Quelle (23, 24), die an einem Träger angebracht ist, durch die Einwirkung wenigstens eines Motorpaares beweglich gemacht wird, um eine Verschiebung jeder Quelle auf wenigstens der unteren Hälfte des Brennpunktsbereichs zu erhalten.

22. Anordnung nach einem der Ansprüche 1 bis 21, bei welcher die Einheit fokussierende Linse/sphärische Linse an einem Träger angebracht ist, der von dem der primären Quellen getrennt ist, **dadurch gekennzeichnet, dass** sie außerdem einen zusätzlichen Motor (90) aufweist, der dafür vorgesehen ist, den Träger der Einheit so anzutreiben, **dass** er sich im Wesentlichen parallel zum Bündel erstreckt.

23. Anordnung nach einem der Ansprüche 1 bis 22, **dadurch gekennzeichnet, dass** jede primäre Quelle (23, 24) durch die Einwirkung eines Paares von Azimut/Höhen-Motoren (34, 35, 56, 57; 36, 37, 58, 59) beweglich gemacht wird.

24. Anordnung nach Anspruch 23, **dadurch gekennzeichnet, dass** jeder Träger einer primären Quelle ein Mittel aufweist, das ein Gehänge (30, 31) bildet, an dem die primäre Quelle (23, 24) fest angebracht ist, wobei jedes Gehänge einerseits entsprechend einer Achse durch einen Motor, Azimutmotor (34, 35) genannt, aus einem Motorpaar, und andererseits in Bezug auf die Vertikale durch einen anderen Motor, Neigungsmotor (36, 37) genannt, des Motorpaars beweglich gemacht wird.

25. Anordnung nach Anspruch 23, **dadurch gekennzeichnet, dass** jeder Träger einer primären Quelle einen Arm (50, 51) aufweist, der einen zum Brennpunktsbereich konzentrischen Kreisbogen bildet, der sich entsprechend auf einer Hälfte des unteren Teils des Brennpunktsbereichs befindet, wobei jeder Arm entsprechend einem Azimut durch einen Motor, Azimutmotor (56, 57) genannt, aus dem Motorpaar beweglich gemacht wird und jede primäre Quelle entlang des Bogens durch den anderen Motor (58, 59) des Motorpaars beweglich gemacht wird.

26. Anordnung nach einem der Ansprüche 1 bis 22, **dadurch gekennzeichnet, dass** jede primäre Quelle durch die Einwirkung eines Paares von Motoren, X/Y-Motoren genannt, beweglich gemacht wird, wobei der erste Motor eine Drehung jeder primären Quelle um eine primäre Achse Ox sicherstellt, die im Wesentlichen horizontal ist, und der zweite Motor (61, 63) eine Drehung jeder primären Quelle um eine sekundäre Achse Oy sicherstellt, die durch den ersten Motor in Bezug auf die primäre Achse beweglich gemacht wird, wobei sie zu dieser primären Achse ständig orthogonal ist.

27. Anordnung nach einem der Ansprüche 1 bis 22, **dadurch gekennzeichnet, dass** die erste primäre Quelle (23) durch die Einwirkung eines Paars von Motoren, Azimut/Höhen-Motoren (70, 71) genannt, beweglich gemacht wird und die zweite primäre Quelle (24) durch die Einwirkung eines Paars von X/Y-Motoren (72, 73) beweglich gemacht wird, wobei der Azimutmotor (70) der ersten primären Quelle (23) außerdem die Antenneneinheit (1) antreibt.

28. Anordnung nach einem der Ansprüche 1 bis 22, **dadurch gekennzeichnet, dass** jede primäre Quelle (23, 24) durch die Einwirkung eines Paares von Motoren (80, 82; 81, 83) mit schrägen Rotationsachsen (O₁, O₂; O'₁, O'₂) beweglich gemacht wird.

29. Anordnung nach Anspruch 28, **dadurch gekennzeichnet, dass** jeder Träger einer primären Quelle (23, 24) einen Arm (84, 85) und einen Vorderarm (86, 87) aufweist, wobei die primäre Quelle an einem freien Ende (88, 89) des Vorderarms angebracht ist, wobei der erste Motor (80, 82) den Arm zu einer Drehung um eine schräge primäre Achse (O₁, O₂) antreibt, die in Bezug auf die Vertikale um einen primären Winkel (αₒ₁, αₒ₂) verschoben ist, wobei der zweite Motor (81, 83) den Vorderarm zu einer Drehung in Bezug auf den Arm um eine schräge sekundäre Achse (O'₁, O'₂) antreibt, die in Bezug auf die Vertikale um einen sekundären Winkel (α'ₒ₁, α'ₒ₂) verschoben ist, der größer als der primäre Winkel (αₒ₁, αₒ₂) ist; wobei sich die primären und sekundären Achsen jedes Motorpaares beiderseits der Vertikalen erstrecken.

## Claims

1. An antenna system for transmitting and receiving radio signals to and from a remote transceiver system (2, 3) moving in the space visible from said antenna, including a lens (22) for focusing quasi-plane waves emitted by said remote transceiver, said means having a focal sphere S, at least one primary source (23, 24) for transmitting and receiving signals in the form of quasi-spherical wave beams, mobile on a portion of the sphere S,
**characterized in that** it includes in combination:
a) a lens (21) for deflecting the quasi-plane waves transmitted or received by the remote transceiver, and
b) means (10, 11) for slaving the position of each primary transmit/receive source to the known position of a remote transceiver.

2. A terminal and antenna system for transmitting and receiving radio signals to and from at least two remote transceiver systems (2, 3) at different points in the space visible from said terminal and antenna system,
**characterized in that** it includes:
a) means for determining the position of said remote transceivers in view at a given time,
b) means for choosing a remote transceiver,
c) an antenna (1) according to claim 1, including at least two primary transmit/receive sources (23, 24),
d) means (11) for controlling movement of the primary transmit/receive sources over the focal sphere S adapted to prevent the primary sources colliding, and
e) means (40) for switching between the primary sources.

3. A system according to claim 2, **characterized in that** it further includes means for recovering data lost during the switching time.

4. A system according to any of claims 1 to 3, **characterized in that** the primary signal transmit/receive sources (23, 24) are in the form of quasi-spherical wave beams taking the form of horn antennas mobile on a portion of the focal sphere S of the lens (22) for focusing the quasi-spherical beams into quasi-plane beams.

5. A system according to any of claims 1 to 4, **characterized in that** at least one primary transmit/receive source (23, 24) includes a module (41, 46, 47) for amplifying the transmitted and received signals.

6. A system according to any of claims 1 to 5, **characterized in that** the lens (22) for focusing quasi-plane waves into quasi-spherical waves is a multifocal convergent lens having a wide scanning range.

7. A system according to claim 6, **characterized in that** the scanning range is made greater than 30° relative to the axis of symmetry of revolution of the focusing lens by moving the primary wave transmit/receive sources (23, 24) over the focal sphere S.

8. A system according to claim 6 or claim 7, **characterized in that** the focusing lens (22) is a convex dielectric lens.

9. A system according to claim 6 or claim 7, **characterized in that** the focusing lens (22) is a concave waveguide lens.

10. A system according to any of claims 6 to 9, **characterized in that** the focusing lens (22) is "zoned".

11. A system according to any of claims 1 to 10, **characterized in that** the lens (21) for deflecting the quasi-plane waves is a dielectric dome lens.

12. A system according to claim 11, **characterized in that** the dome lens (21) has a generally hemispherical overall profile.

13. A system according to claim 11, **characterized in that** the dome lens (21) has generally parabolic, elliptical or hyperbolic inside and outside profiles.

14. A system according to any of claims 1 to 13, **characterized in that** the deflecting lens (21) also constitutes means for isolating the system from the external environment.

15. A system according to any of claims 11 to 14, **characterized in that** the deflecting lens (21) increases in thickness from its summit to its base.

16. A system according to any of claims 1 to 15, **characterized in that** at least one of the lenses (21, 22) includes a quarter-wave type matching layer.

17. A system according to claim 16, **characterized in that** the matching layer comprises a dielectric material having an index equal to the square root of the index of the dielectric material of the lens.

18. A system according to claim 16, **characterized in that** the thickness of the matching layer is equal to one quarter of the wavelength used and the matching layer is pierced with a plurality of blind holes with a density of piercing adapted to create an equivalent index equal to the square root of the index of the dielectric material of the lens.

19. A system according to any of claims 2 to 18, **characterized in that** the remote transmitters/receivers are satellites of a constellation and the means for determining the position at a given time of the satellites in sight comprise:
- a database of the orbital parameters of each satellite at a given time,
- means for storing terrestrial position parameters for the terminal and antenna system,
- software for calculating the current position of each satellite from initial orbital parameters and the time which has elapsed since an initial time,
- software for comparing the orbital position with the angular area visible from the position of the terminal and antenna system, and
- means for regularly updating the database of orbital parameters of the remote transmitters/receivers.

20. A system according to any of claims 1 to 19, **characterized in that** the primary transmit/receive sources (23, 24) include means for detecting a pointing error relative to the beam received from a moving remote transceiver.

21. A system according to any of claims 1 to 20, **characterized in that** to move each source over at least the lower half of the focal sphere each primary source (23, 24) is mounted on a support and is moved by at least one pair of motors.

22. A system according to any of claims 1 to 21, wherein the focusing lens/spherical lens assembly is mounted on a support separate from that of the primary sources, **characterized in that** it further includes an additional motor (90) for driving the support of said assembly so that it extends substantially parallel to the beams.

23. A system according to any of claims 1 to 22, **characterized in that** each primary source (23, 24) is moved by a pair of azimuth and elevation motors (34, 35, 56, 57; 36, 37, 58, 59).

24. A system according to claim 23, **characterized in that** each primary source support includes swing means (30, 31) on which the primary source (23, 24) is fixedly mounted, each swing being moved along an axis by an azimuth motor (34, 35) of the motor pair and relative to the vertical by an inclination motor (36, 37) which is the other motor of that pair.

25. A system according to claim 23, **characterized in that** each primary source support includes an arm (50, 51) forming a circular arc concentric with the focal sphere, positioned on a respective half of the lower part of the focal sphere, each arm being rendered mobile in azimuth by an azimuth motor (56, 57) of the motor pair and each primary source being rendered mobile along the arc by the other motor (58, 59) of the motor pair.

26. A system according to any of claims 1 to 22, **characterized in that** each primary source is moved by a pair of X and Y motors, the first motor rotating each primary source about a horizontal primary axis Ox and the second motor (61, 63) rotating each primary source about a secondary axis Oy orthogonal to said primary axis at all times and moved relative to the primary axis by the first motor.

27. A system according to any of claims 1 to 22, **characterized in that** a first primary source (23) is moved by a pair of azimuth and elevation motors (70, 71) and the second primary source (24) is moved by a pair of X and Y motors (72, 73), the azimuth motor (70) of the first primary source (23) also driving the antenna as a whole (1).

28. A system according to any of claims 1 to 22, **characterized in that** each primary source (23, 24) is moved by a pair of motors (80, 82; 81, 83) with oblique rotation axes (O₁, O₂ ; O'₁, O'₂).

29. A system according to claim 28, **characterized in that** each primary source support (23, 24) includes an arm (84, 85) and a forearm (86, 87), the primary source is fixed to a free end (88, 89) of the forearm, the first motor (80, 82) drives the arm in rotation about an oblique primary axis (O₁, O₂) offset to the vertical at a primary angle (α₀₁, α₀₂), the second motor (81, 83) drives the forearm in rotation relative to the arm about an oblique secondary axis (O'₁, O'₂) offset to the vertical at a secondary angle (α'₀₁, α'₀₂) greater than the primary angle (α₀₁, α₀₂), and the primary and secondary axes of each motor pair are on respective opposite sides of the vertical.
